(19) Europäisches Patentamt
European Patent Office
Office européen des brevets

(11) EP 4 708 226 A1

(12) EUROPEAN PATENT APPLICATION

(43) Date of publication:
11.03.2026 Bulletin 2026/11

(21) Application number: 24198446.7

(22) Date of filing: 04.09.2024

(51) International Patent Classification (IPC):
G06V 20/59 $^{(2022.01)}$    G06T 7/73 $^{(2017.01)}$
G06V 40/10 $^{(2022.01)}$

(52) Cooperative Patent Classification (CPC):
G06V 20/597; G06T 7/74; G06V 40/103;
G06V 20/593

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Valeo Comfort and Driving Assistance
94000 Créteil (FR)

(72) Inventors:
• TAMAM, Mahmoud
  0000 Cairo (EG)
• ELFAKHARANY, Ahmed
  0000 Cairo (EG)
• SAMER, Sara
  0000 Cairo (EG)
• GOMAA, Fatma
  0000 Cairo (EG)
• TLAISS,, Zeina
  94000 Créteil (FR)

(74) Representative: Ralf, Thorge
Valeo Schalter und Sensoren GmbH
Laiernstraße 12
74321 Bietigheim-Bissingen (DE)

(54) **METHOD AND APPARATUS FOR DETERMINING A POSTURE OF A USER OF A VEHICLE**

(57) The invention relates to a method for determining a posture of a user (100) of a vehicle (200), comprising:

Receiving sensor-based measurement data, which represent the user (100) in the vehicle (200);

Determining a seat-position of the user (100), based on the measurement data;

Determining positions of a plurality of reference points (P1, P2, P3, P4) of a torso (110) of the user (100) at the seat-position, based on the measurement data;

Determining a torso-plane (120) of the torso (110) based on the determined positions of the plurality of reference points (P1, P2, P3, P4);

Determining an angle of rotation (θ) of the torso-plane (120) around an axis (x, y, z) with respect to a reference angle of rotation;

Determining a body posture by using the determined angle of rotation (θ) and a body posture classification algorithm.

Fig. 1A

**Description**

The present invention relates to a method and an apparatus for determining a posture of a user of a vehicle. The invention further relates to a vehicle and a computer program.

Modern vehicles, such as cars, often have a wide range of functions, which usually include various vehicle or comfort functions, such as navigation system settings, air conditioning, seat settings, lighting settings and the like. Various functions of an infotainment system can also be operated, such as playing music, making phone calls and the like. A user, in particular the driver or another passenger, such as the co-driver, may interact with the vehicle via a human-machine interface, which may have an input device for receiving user input and a display device to display a graphical user interface (GUI). Specifically, at least one display is usually provided as part of the user interface to display and control the functions, for example centrally in the dashboard. Another type of interaction between the co-driver and the vehicle is when the co-driver is looking at something in the glove box and leaning forward

In addition, cameras in the interior of a vehicle can be used to identify vehicle occupants and to determine an user's, in particular a driver's, condition, for example whether the driver is sufficiently alert due to their head position or eye status.

Such a function can be implemented by comparing captured images of the user with reference images which are stored in a database. These comparisons of images can require a lot of computing resources.

It is an object of the present invention to provide an improved possibility for determining a posture of a user. Especially determining if a user is so called out of position such that active safety systems of the car like the airbag can't be triggered safely.

A solution to this problem is provided by the teaching of the independent claims. Various preferred embodiments of the present invention are provided by the teachings of the dependent claims.

**A first aspect** of the invention is directed to a, particularly computer-implemented, method for determining a posture of a user of a vehicle, comprising: (i) Receiving sensor-based measurement data, which represent the user in the vehicle; (ii) Determining a seat-position, in particular a 3D seat-position, of the user, based on the measurement data; (iii) Determining positions, in particular 3D positions, of a plurality of reference points, in particular 4 reference points, of a torso of the user at the seat-position, based on the measurement data; (iv) Determining a torso-plane of the torso based on the plurality of reference points; (v) Determining an angle of rotation of the torso-plane around an axis with respect to a reference angle of rotation; (vi) Determining a body posture by using the determined angle of rotation and a body posture classification algorithm.

The term "body posture", as used herein, refers to a way a body of a user is positioned, including whether one is standing or sitting, the relative positions of body parts, and how much space the body occupies. In particular a body posture relates to a position of a torso of the user.

The term "torso", as used herein, refers in particular to a part of a body of a human being, in particular a user, without head, arms and legs. In particular a torso comprises a part between the shoulders and the hips of the user.

The term "control unit" as used herein means in particular an electronic device which at least partially controls the operation of a vehicle device, in particular by means of a processor, in particular a CPU. In particular, the control device may have a transmitting and receiving unit for transmitting and receiving wireless signals, such as electromagnetic signals, and/or wired signals via cables, such as electrical signals. In particular, such a control device can have a microprocessor for analysing received and/or already stored data and/or for initiating a control process.

The term "image sensor", as used herein, refers in particular to an electro-optical sensor, in particular of a camera, which is capable of sensory perception of a scene. In particular, the image sensor can be designed to detect or measure electromagnetic signals and convert them into electrical signals. Such a sensor can be a charge-coupled sensor (CCD) in particular, a radar sensor, a lidar sensor or another sensor. In particular, the image sensor can be designed as a 3D image sensor that can capture a scene in three spatial dimensions, and that distances of the scene can be measured as well. In addition, such a sensor can also be designed to emit electromagnetic signals to an object and in turn detect the reflected electromagnetic signals from this object, so that information about the object can be obtained from the emitted and reflected electromagnetic signals in a subsequent evaluation. Such sensors are used in so-called TOF (time-of-flight) cameras.

If applicable, the terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The term "plural" as used herein shall be understood in the sense of "two or more".

The term "configured" or "set up" to perform a certain function (and respective variations thereof) as used herein shall be understood as meaning that the corresponding device is already present in a configuration or setting in which it can perform the function or that it is at least adjustable - i.e. configurable - in such a way that it can perform the function after corresponding adjustment. In this context, the configuration can be carried out, for example, by means of a corresponding setting of parameters of a process sequence or of switches or the like for activating or deactivating functionalities or settings. In particular, the device can have several predetermined configurations or operating modes, so that the configuration can be performed by means of a selection of one of these configurations or operating modes.

Where the term "comprising" or "including" is used in the present description and claims, it does not exclude other elements or steps. Where an indefinite or definite article is used when referring to a singular noun e.g., "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "position" or "3D-position" represents positions of an object, wherein such an object position in particular may be represented by a position of a focal point of the object or a centre point of a cross section of the object. In particular a 3D-position is represented by three coordinates (x, y, z).

The method according to the first aspect enables determining a posture of a user of a vehicle on the basis of a plurality of reference points of a torso of the user. Wherein the plurality of the reference points represents a torso-plane and an angle of rotation of the torso-plane around an axis regarding a reference angle can be used to determine a posture of the user. In particular the reference points can be extracted from a captured image from the user by using a machine learning algorithm like a deep learning model, which has been trained with images of previous users. This can enable a determination of the posture which requires less computing recourses compared to a solution where images of postures are compared to reference images.

In the following, preferred embodiments of the method are described, which can be arbitrarily combined with each other or with other aspects of the present invention, unless such combination is explicitly excluded or technically impossible.

In some embodiments the body posture classification algorithm is based on a machine learning algorithm, wherein the method further comprises: (i) Training of the machine learning algorithm by recorded multiple reference-angles of corresponding multiple reference body postures; (ii) Determining the body posture by using the trained machine learning algorithm. This can enable a more accurate determination of the body posture, because the determination is based on previous recorded reference body postures and corresponding reference angles.

In some embodiments the method further comprises determining an awareness status of the user based on the determined body posture and a reference-status. In particular a reference-status can be tired, attentive, asleep, distracted or another status which can be related to a body posture. The determination of the awareness status enables determining if the user is for example capable for driving the vehicle.

In some embodiments the method comprises outputting a warning signal in the vehicle if the determined awareness status does not fulfil a preset criterium. In particular a preset criterium can be that a warning signal which is output in the vehicle can then be recognized by the driver or a further passenger, and a driving action can be stopped if necessary. Overall, this can improve safety of driving.

In some embodiments the outputting of the warning signal occurs optically and/or acoustically by a display-device of the vehicle. An optical output can have the advantage that this might cause less distraction while driving compared to an acoustical output. An acoustical output can have the advantage to cause a better attention to all passengers in the vehicle compared to an optical output. In particular a combined optical and acoustical output can cause an even better attention to the passengers, and at the same time it can comprise combined information. For example, the acoustical output can cause the attention of the passengers whereas the optical output can comprise an information regarding the reason of the output.

In some embodiments the method further comprises classifying the determined body posture to a body posture class out of multiple preset body posture classes. In particular these preset body posture classes can be leaning forward, leaning backward, leaning left or leaning right. This classification enables a more efficient processing regarding a further evaluation of the body posture, in particular regarding determining the awareness status. For example, leaning left can be less critical regarding driving compared to leaning forward, because for leaning left there is only little space to the left front door, which means the angle of rotation for leaning left is small.

In some embodiments the method comprises outputting the detected positions (idle, leaning forward, leaning backward, feet/foot on dash board, etc...) to the vehicle in order to disable the airbag triggering or adapt the belt restraints system.

In some embodiments the method further comprising determining the reference-angle at a reference posture of the user, while the user is at a seat-position. This can enable a more accurate determination of the body posture because the reference posture is determined at the seat position of the user from which the body posture subsequently is determined.

In some embodiments determining the torso-plane comprises determining a mathematical vector-product of a first vector and a second vector, wherein the first vector connects positions of reference points of the plurality of reference points which are located at a left shoulder and a right shoulder of the torso, and the second vector connects positions of reference points of the plurality of reference points which are located at the left shoulder and a left hip of the torso. This can enable a reliable and with reasonable effort implementable process for determining of the torso plane and for determining the angle of rotation. Determining a vector between two points, as required both for the first vector and the second vector, is at standard mathematical operation. The same applies for determining a vector-product of the two vectors. For both determining the vectors and the vector product analytical calculations, but not numerical approximations, are possible once the required reference points are known. Therefore, this process is rather precise, and the precision depends on the accuracy of the determined positions of the reference points. Further due to the described analytical calculations little computing resources are required.

In some embodiments the method further comprises: (i) Receiving the sensor-based measurement data in preset time-intervals over a specified period of time; (ii) Determining a body posture at each time-interval; (iii) Determining a direction of movement of the body posture by using the determined body postures. This can enable a forecast of a further body posture. This can be relevant if the torso moves into an extreme, for example if the torso of a driver could move towards contacting the steering wheel or moving strongly towards to co-driver seat. These can be indications that the driver is not well. By determining the movement of the body posture this can be determined in time.

In some embodiments the method further comprises: (i) Determining angles of rotation of the torso-plane around three axes, each with respect to a reference-angle; (ii) Determining the body posture by using the determined three angles of rotation and the body posture classification algorithm. This can enable determining a body posture wherein the torso is rotated around the three axes. This can enable a more accurate determination of the body posture compared to a determination based on a rotation around one axis. Further it can enable classifying the body posture to additional preset body posture classes compared to a body posture which relates to an angle of rotation round one axis. For example, a twisting torso can be such an additional class.

**A second aspect** of the invention is directed to an apparatus, the apparatus being configured to perform the method according to the first aspect.

In some embodiments the apparatus comprises: (i) A camera which is configured to receive sensor-based measurement data, which represent the user in the vehicle; (ii) A control unit which is configured to carry out the following steps: (ii-1) Determining a seat-position of the user, based on the measurement data; (ii-2) Determining positions of a plurality of reference points of a torso of the user at the seat-position, based on the measurement data; (ii-3) Determining a torso-plane of the torso based on the determined positions of the plurality of reference points; (ii-4) Determining an angle of rotation of the torso-plane around an axis with respect to a reference angle of rotation; (ii-5) Determining a body posture by using the determined angle of rotation and a body posture classification algorithm.

In some embodiments the apparatus comprises a display-device, which is configured to output an optically and/or acoustically signal.

**A third aspect** of the invention is directed to a vehicle comprising an apparatus according to the second aspect.

**A fourth aspect** of the present invention is directed to a computer program or a computer program product, comprising instructions, which when executed on an apparatus according to the second aspect of the invention cause the apparatus to perform the method according to the first aspect of the invention.

The computer program (product) may in particular be implemented in the form of a data carrier on which one or more programs for performing the method are stored. Preferably, this is a data carrier, such as a CD, a DVD or other optical medium, or a flash memory module. This may be advantageous, if the computer program product is meant to be traded as an individual product independent from the processor platform on which the one or more programs are to be executed. In another implementation, the computer program product is provided as a file on a data processing unit, in particular on a server, and can be downloaded via a data connection, e.g., the internet or a dedicated data connection, such as a proprietary or local area network.

The apparatus of the second aspect may accordingly have a program memory in which the computer program is stored. Alternatively, the apparatus may also be set up to access a computer program available externally, for example on one or more servers or other data processing units, via a communication link, in particular to exchange with it data used during the course of the execution of the computer program or representing outputs of the computer program.

The explanations, embodiments and advantages described above in connection with the method of the first aspect similarly apply to the other aspects of the invention.

Further advantages, features and applications of the present invention are provided in the following detailed description and the appended drawings, wherein:

The various embodiments and advantages described above in connection with the first aspect of the present invention similarly apply to the other aspects of the invention. Further advantages, features and applications of the present invention are provided in the following detailed description and the appended figures, wherein:

 **Fig. 1A** schematically illustrates a user with a torso in a perspective view and reference points of the torso;

 **Fig. 1B** schematically illustrates a vector view;

**Fig. 2** schematically illustrates a top view of a vehicle; and

**Fig. 3** shows a flowchart of a method for determining a posture.

In the figures, identical reference signs are used for the same or mutually corresponding elements of the invention described herein.

DETAILED DESCRIPTION OF EMBODIMENTS

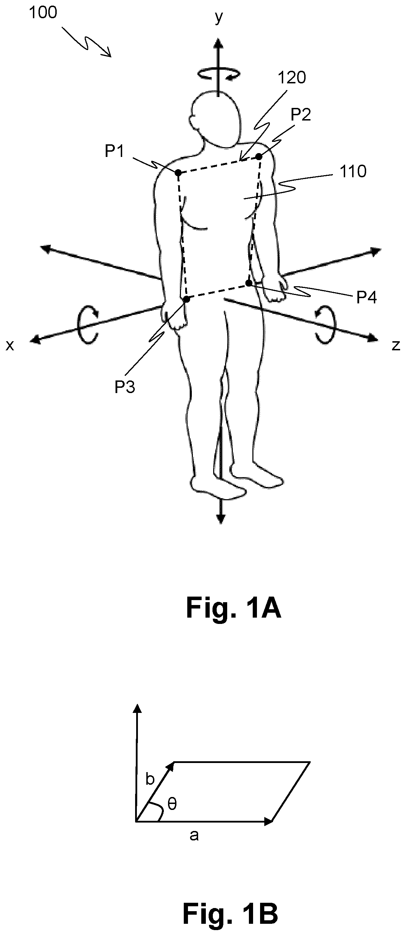

**Fig. 1A** schematically illustrates a user 100 with a torso 110 in a perspective view and reference points P1, P2, P3, P4 of the torso 110. Thereby the reference point P1 is located at a right shoulder, P2 at a left shoulder, P3 at a right hip and P4 at a left hip.

These reference points P1, P2, P3, P4 represent a 3D planar space. The orientation of the 3D-planar space represents a torso orientation in 3D.

The 3D planar orientation can be represented in pitch, yaw and roll degrees, each one represents a rotation over a corresponding axis x, y, z.

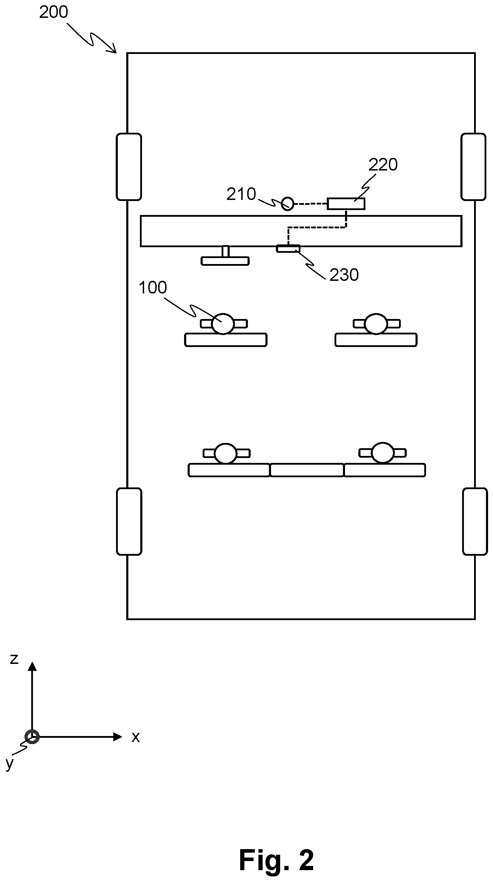

For determining the reference points P1, P2, P3, P4 a deep learning model is trained to extract the 3D world coordinates of the user joints is used for every passenger cropped image. Known algorithms for determining skeleton point coordinates such as the reference points P1, P2, P3, P4 by using a captured image can be used. Thereby the z-coordinate of a reference point P1, P2, P3, P4 represents the distance to a camera 210 which can capture an image of the user 100, see Fig. 2.

**Fig. 1B** schematically illustrates a vector view. The torso 110 as described in Fig. 1A can be represented by vectors a and b which connect neighbouring reference points of the reference points P1, P2, P3, P4.

Thereby the reference point P2 of the left shoulder P2 and the reference point P1 of the right shoulder are connected by a vector $\vec{a}$ and the reference point P2 of the right shoulder P2 and the reference point P4 of the right hip are connected by a vector $\vec{a}$. By a vector-product, also known as cross product, of $\vec{a}$ and $\vec{b}$ one receives a normal vector $\vec{a} \times \vec{b}$. By calculating the inverse sin of the normal vector and the torso-plane the angles of rotation around the corresponding axis x, y, z, in other words the pitch, yaw and roll degrees, can extracted by:

$$\theta = \sin^{-1}\left(\frac{|a \times b|}{|a||b|}\right)$$

wherein a and b being vectors.

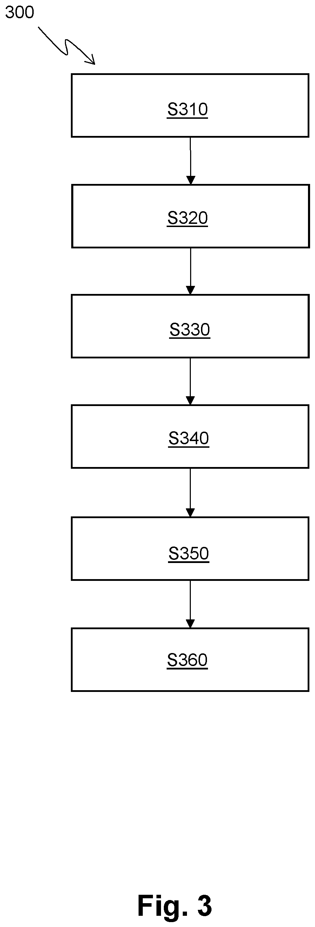

**Fig. 2** schematically illustrates a top view of a vehicle 200. The vehicle comprises a camera 210 which is configured to capture images or scenes in the interior of the vehicle 200, in particular of the driver 100 or another passenger of the vehicle. The camera 210 is mounted above the windscreen. The camera 210 can be also integrated in an interior mirror (not shown here) or at another region in the interior of the vehicle. The camera 210 is connected to a control unit 220 which is configured to analyse the images of the camera 210. In particular the control unit 220 is configured to carry out the method steps as described in Fig. 3.

The control unit 220 is further connected a display-device 230, in particular a so-called central information display (CID) of the vehicle 200. The display-device 230 is configured to output a signal which is initiated by the control unit 220. This signal can be a warning signal, in particular acoustically and/or optically, based on a result of the determined body posture. Thereby the display-device 230 comprises a display for presenting information which can be viewed by a user. Further, the display-device can comprise integrated loudspeakers for outputting acoustical signals. It is also possible that the display-device 230 is connected to external speakers (not shown here) of the vehicle, which can output the acoustical signal originated from the display-device 230.

**Fig. 3** shows a flowchart 300 of a method for determining a posture of a user 100 of a vehicle 200.

In a first step S310 the method comprises receiving sensor-based measurement data, in particular by using a camera 210, wherein the sensor-based measurement data represent the user 100 at a seat position in the vehicle 200.

In a further step S320 the method comprises determining a seat-position of the user 100, based on the measurement data. In a first approximation this relates to the determination of which seat the user 100 occupies.

In a further step S330 the method comprises determining positions of a plurality of reference points P1, P2, P3, P4 of a torso 110 of the user 100 at the seat-position, based on the measurement data. In particular these reference points P1, P2, P3, P4 are located at the left shoulder, the right shoulder, the left hip and the right hip of the user 100. In this way the reference points P1, P2, P3, P4 define a plane.

In a further step S340 the method comprises determining a torso-plane 120 of the torso 110 based on the determined positions of the plurality of reference points P1, P2, P3, P4. Thereby the reference points P1, P2, P3, P4 as described in step S330 can be used. The plane can then be determined as described in Fig. 1B.

In a further step S350 the method comprises determining an angle of rotation θ of the torso-plane 120 around an axis x, y, z with respect to a reference angle of rotation. For this the equation for the angle of rotation θ as described in Fig. 1B can be used.

In a further step S360 the method comprises determining a body posture by using the determined angle of rotation θ and a body posture classification algorithm.

While above at least one exemplary embodiment has been described, it has to be noted that a great number of variations thereto exists. Furthermore, it is appreciated that the described exemplary embodiments only illustrate non-limiting examples of how the present solution can be implemented and that it is not intended to limit the scope, the application or the configuration of the herein-described apparatus' and methods. Rather, the preceding description will provide the person skilled in the art with constructions for implementing at least one exemplary embodiment of the solution, wherein it has to be understood that various changes of functionality and the arrangement of the elements of the exemplary embodiment can be made, without deviating from the subject-matter defined by the appended claims and their legal equivalents.

LIST OF REFERENCE SIGNS

| 100 | User |
| 110 | Torso |
| 120 | Torso-plane |

| P1-P4 | Reference points of torso |
| θ | Angle of rotation |
| $\vec{a}, \vec{b}$ | vectors |

| 200 | Vehicle |
| 210 | Camera |
| 220 | Control unit |
| 230 | Display-device |

| 300 | Flowchart of a method |
| S310 | Receiving sensor-based measurement data |
| S320 | Determining a seat-position of the user |
| S330 | Determining positions of reference points |
| S340 | Determining a torso-plane |
| S350 | Determining an angle of rotation |
| S360 | Determining a body posture |

**Claims**

1. A method for determining a posture of a user (100) of a vehicle (200), comprising:

   Receiving sensor-based measurement data, which represent the user (100) in the vehicle (200);
   Determining a seat-position of the user (100), based on the measurement data;
   Determining positions of a plurality of reference points (P1, P2, P3, P4) of a torso (110) of the user (100) at the seat-position, based on the measurement data;
   Determining a torso-plane (120) of the torso (110) based on the determined positions of the plurality of reference points (P1, P2, P3, P4);
   Determining an angle of rotation (θ) of the torso-plane (120) around an axis (x, y, z) with respect to a reference angle of rotation;
   Determining a body posture by using the determined angle of rotation (θ) and a body posture classification algorithm.

2. The method of claim 1, wherein the body posture classification algorithm is based on a machine learning algorithm, wherein the method further comprises:

   Training of the machine learning algorithm by recorded multiple reference-angles of corresponding multiple reference body postures;
   Determining the body posture by using the trained machine learning algorithm.

3. The method of claim 1 or 2, further comprising determining an awareness status of the user based on the determined body posture and a reference-status.

4. The method of claim 3, comprising outputting a warning signal in the vehicle (200) if the determined awareness status does not fulfil a preset criterium.

5. The method of claim 4, wherein the outputting of the warning signal occurs optically and/or acoustically by a display-device (230) of the vehicle (200).

6. The method of any one of the preceding claims, further comprising classifying the determined body posture to a body posture class out of multiple preset body posture classes.

7. The method of any one of the preceding claims, further comprising determining the reference-angle at a reference posture of the user (100), while the user is at the seat-position.

8. The method of any one of the preceding claims, wherein determining the torso-plane (120) comprises determining a mathematical vector-product of a first vector ($\vec{a}$) and a second vector ($\vec{b}$), wherein the first vector ($\vec{a}$) connects positions of reference points of the plurality of reference points (P1, P2, P3, P4) which are located at a left shoulder and a right shoulder of the torso (110), and the second vector ($\vec{b}$) connects positions of reference points of the plurality of reference points (P1, P2, P3, P4) which are located at the left shoulder and a left hip of the torso (110).

9. The method of any one of the preceding claims further comprising:

   Receiving the sensor-based measurement data in preset time-intervals over a specified period of time;
   Determining a body posture at each time-inter-

6

val;
Determining a direction of movement of the body posture by using the determined body postures.

10. The method of any one of the preceding claims further comprising:

Determining angles of rotation of the torso-plane (120) around three axes (x, y, z), each with respect to a reference-angle;
Determining the body posture by using the determined three angles of rotation and the body posture classification algorithm.

11. An apparatus for determining a posture of a user (100) of a vehicle (200), wherein the apparatus is configured to perform the method according to any of the preceding claims.

12. The apparatus of claim 11, comprising:

A camera (210) which is configured to receive sensor-based measurement data, which represent the user (100) in the vehicle (200);
A control unit (220) which is configured to carry out the following steps:

Determining a seat-position of the user (100), based on the measurement data;
Determining positions of a plurality of reference points (P1, P2, P3, P4) of a torso (110) of the user (100) at the seat-position, based on the measurement data;
Determining a torso-plane (120) of the torso (110) based on the determined positions of the plurality of reference points (P1, P2, P3, P4);
Determining an angle of rotation ($\theta$) of the torso-plane (120) around an axis (x, y, z) with respect to a reference angle of rotation;
Determining a body posture by using the determined angle of rotation ($\theta$) and a body posture classification algorithm.

13. The apparatus of claim 12, comprising a display-device (230), which is configured to output an optically and/or acoustically signal.

14. A vehicle comprising an apparatus of any one of claims 11 to 13.

15. A computer program or a computer program product, comprising instructions, which when executed on an apparatus according to of any one of claims 11 to 13 cause the apparatus to perform the method according to any one of claims 1 to 10.

**Fig. 1A**

**Fig. 1B**

**Fig. 2**

**Fig. 3**

# EUROPEAN SEARCH REPORT

**Application Number**

EP 24 19 8446

## DOCUMENTS CONSIDERED TO BE RELEVANT

| Category | Citation of document with indication, where appropriate, of relevant passages | Relevant to claim |
|---|---|---|
| X | US 2021/129851 A1 (WIECZOREK ROMEO [DE]) 6 May 2021 (2021-05-06) | 1-7,9-15 |
| A | * paragraphs [0002] - [0088] * <br> * figures 1-8 * | 8 |
| | ----- | |
| X | US 2019/340451 A1 (MURAKAMI SHINICHIRO [JP]) 7 November 2019 (2019-11-07) | 1,11,15 |
| A | * paragraphs [0022] - [0050] * <br> * figures 1-7 * | 8 |
| | ----- | |
| X | US 2023/406250 A1 (PARK HYUNG WOOK [KR] ET AL) 21 December 2023 (2023-12-21) <br> * paragraphs [0060] - [0113] * <br> * figures 6-9B * | 1,11,15 |
| | ----- | |
| A | US 2022/405922 A1 (KRUEGER SASCHA [DE]) 22 December 2022 (2022-12-22) <br> * paragraphs [0013] - [0018] * | 8 |
| | ----- | |

**CLASSIFICATION OF THE APPLICATION (IPC)**

INV.
G06V20/59
G06T7/73
G06V40/10

**TECHNICAL FIELDS SEARCHED (IPC)**

G06V
G06T

The present search report has been drawn up for all claims

| Place of search | Date of completion of the search | Examiner |
|---|---|---|
| The Hague | 7 February 2025 | Hermes, Lothar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8446

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | Publication date | Patent family member(s) | Publication date |
|---|---|---|---|
| US 2021129851 A1 | 06-05-2021 | DE 102018111596 A1 | 21-11-2019 |
| | | EP 3793854 A1 | 24-03-2021 |
| | | EP 4002301 A1 | 25-05-2022 |
| | | US 2021129851 A1 | 06-05-2021 |
| | | WO 2019219722 A1 | 21-11-2019 |
| US 2019340451 A1 | 07-11-2019 | JP 6798299 B2 | 09-12-2020 |
| | | JP 2018096946 A | 21-06-2018 |
| | | US 2019340451 A1 | 07-11-2019 |
| | | WO 2018109997 A1 | 21-06-2018 |
| US 2023406250 A1 | 21-12-2023 | CN 117087588 A | 21-11-2023 |
| | | KR 20230162838 A | 29-11-2023 |
| | | US 2023406250 A1 | 21-12-2023 |
| US 2022405922 A1 | 22-12-2022 | CN 114730500 A | 08-07-2022 |
| | | DE 112020005529 T5 | 17-11-2022 |
| | | EP 3822845 A1 | 19-05-2021 |
| | | JP 7569854 B2 | 18-10-2024 |
| | | JP 2023502900 A | 26-01-2023 |
| | | US 2022405922 A1 | 22-12-2022 |
| | | WO 2021094123 A1 | 20-05-2021 |

EPO FORM P0459

For more details about this annex : see Official Journal of the European Patent Office, No. 12/82